Europäisches Patentamt

European Patent Office

Office européen des brevets

(19)

(11) Numéro de publication : **0 341 115 B1**

(12) **FASCICULE DE BREVET EUROPEEN**

(45) Date de publication du fascicule du brevet :
**22.01.92 Bulletin 92/04**

(51) Int. Cl.$^5$ : **B65D 51/28,** B65D 81/32

(21) Numéro de dépôt : **89401104.8**

(22) Date de dépôt : **20.04.89**

(54) **Dispositif pour introduire une quantité dosée de produit à l'intérieur d'une enceinte.**

(30) Priorité : **04.05.88 FR 8805976**

(43) Date de publication de la demande :
**08.11.89 Bulletin 89/45**

(45) Mention de la délivrance du brevet :
**22.01.92 Bulletin 92/04**

(84) Etats contractants désignés :
**DE GB**

(56) Documents cités :
**EP-A- 0 235 806
DE-U- 7 736 840**

(73) Titulaire : **TECNOMA
54, Rue Marcel Paul
F-51206 Epernay (FR)**

(72) Inventeur : **Ballu, Patrick Jean-Marie
4 rue du Général Baratier
F-51100 Reims (FR)**

(74) Mandataire : **Colas, Jean-Pierre et al
Cabinet de Boisse 37, avenue Franklin D.
Roosevelt
F-75008 Paris (FR)**

Jouve, 18, rue Saint-Denis, 75001 PARIS

## Description

La présente invention est relative à un dispositif pour introduire une quantité dosée d'un produit à l'intérieur d'une enceinte sans que ledit produit puisse se répandre à l'extérieur de l'enceinte.

La tendance actuelle, dans l'agriculture, est d'utiliser des produits de traitement qui sont livrés sous une forme concentrée, et dilués sur place avec de l'eau dans un réservoir de grande dimension, juste avant la dispersion sur le sol ou sur les végétaux. Les produits de traitement, à l'état concentré, peuvent être dangereux pour le personnel d'utilisation ou pour l'environnement. Ils doivent donc être contenus dans des récipients étanches avant l'emploi, et le récipient vide, qui contient encore de faibles quantités de produit, doit être refermé après usage pour être traité dans une installation spéciale. Ceci revient à dire que le récipient contenant le produit concentré doit être fermé tant qu'il n'est pas en relation avec le réservoir de mélange, et ne s'ouvrir que vers l'intérieur de ce réservoir, ou bien dans une enceinte spécialement prévue pour son nettoyage éventuel.

Il convient, cependant, que le dispositif soit simple et d'un prix de revient peu élevé, et qu'il puisse s'adapter facilement sur les réservoirs existants, avec un minimum de transformation de ceux-ci.

On a décrit, dans EP-A-0235806, un dispositif pour introduire une quantité dosée d'un produit à l'intérieur d'une enceinte sans que ledit produit puisse se répandre à l'extérieur de l'enceinte, ce dispositif comprenant :

— un bouchon susceptible de se visser sur un orifice traversant la paroi de l'enceinte,

— une capsule qui fait partie dudit bouchon, et qui est en deux parties séparables, vissées l'une sur l'autre, l'une des parties étant entraînée en rotation avec le couvercle lors du vissage de celui-ci, alors que des moyens sont prévus pour empêcher la rotation de l'autre partie de la capsule pendant ce vissage, les sens et les pas des vissages des deux parties de la capsule l'une sur l'autre et du bouchon sur l'orifice de l'enceinte étant calculés pour que le vissage du couvercle entraîne en même temps l'obturation de l'orifice et le dévissage relatif des deux parties de la capsule, ceci ayant pour conséquence la libération à l'intérieur de l'enceinte du produit contenu dans la capsule, ces éléments sont repris dans le préambule de la revendication 1.

Le dispositif dans le document cité a pour particularités, entre autres, que l'une des parties de la capsule est solidaire du bouchon, si bien qu'on doit stocker et manipuler des bouchons d'un volume considérablement supérieur au volume de produit contenu dans la capsule, et que l'autre partie de la capsule a la forme d'un godet ouvert à sa partie supérieure, si bien que la libération complète du produit contenu ne peut avoir lieu qu'après la chute de ce godet dans l'enceinte.

Le but de l'invention est de fournir un dispositif qui ne présente pas les inconvénients qui résultent des particularités qu'on vient d'énoncer.

En conséquence, l'invention fournit un dispositif du type décrit ci-dessus et qui présente pour particularité qu'une partie de la capsule comportent des lumières qui la traversent et qui sont obstruées par l'autre partie lorsque les deux parties sont vissées à fond, de façon à contenir ledit produit de façon étanche dans la capsule, ces lumières s'ouvrant par le dévissage relatif des deux parties pour mettre l'intérieur de la capsule en communication avec l'intérieur de l'enceinte.

De préférence, le bouchon est constitué d'un collier qui peut être monté par vissage sur le bord dudit orifice, et de la capsule elle-même, dont une première partie est solidaire en rotation du collier, alors que la seconde partie de la paroi interne de l'orifice comporte des moyens coopérant pour empêcher la rotation de la seconde partie.

Avantageusement, la première partie de la capsule peut être séparée du collier et être serrée entre le collier et le bord de l'orifice lorsque le bouchon est vissé.

Suivant une réalisation pratique intéressante, la première partie de la capsule comprend un fond et une paroi cylindrique ayant une ouverture dirigée ver l'intérieur de l'enceinte lorsque le dispositif est en place, cette paroi cylindrique portant extérieurement une collerette destinée à être serrée entre le bord de l'orifice et le collier, des saillants ou rainures pour le coopération avec le collier, et un filetage extérieur, et la seconde partie de la capsule comprend un fond et une paroi cylindrique ayant une ouverture dirigée vers l'opposé de celle de la première partie, le bord de la paroi cylindrique de la première partie venant, en position vissée, en appui étanche sur le fond de la seconde partie, et la paroi cylindrique de la second partie présente un filetage intérieur pour coopérer avec le filetage extérieur de la première partie, et des saillants ou rainures pour la coopération avec des reliefs correspondants de la paroi interne de l'orifice, cette paroi cylindrique présentant en outre des lumières au voisinage du fond.

Suivant cette réalisation, c'est la première partie de la capsule, avec sa collerette serrée contre le bord de l'orifice, qui constitue à elle seule l'obturation de ce dernier.

Pour éviter une fausse manoeuvre entraînant la chute de la deuxième partie à l'intérieur de l'enceinte, on prévoit avantageusement des moyens pour empêcher les deux parties de la capsule de se séparer lorsqu'elles sont divisées. Ces moyens peuvent comprendre deux crochets portés par une des parties et coopérant avec une des saillies de l'autre partie de la capsule.

Suivant une variante intéressante, au cas où la paroi interne de l'orifice est lisse, on prévoit que le dispositif comprend un adaptateur qui se fixe sur le récipient pour prolonger l'orifice, et qui porte lesdits reliefs coopérant avec des saillants ou rainures de la paroi cylindrique de la seconde partie en vue d'empêcher la rotation de celle-ci.

L'invention va maintenant être décrite de façon plus détaillée à l'aide d'exemples pratiques de réalisation, illustrés avec les dessins, par lesquels :

Figure 1 est une demi-coupe axiale du dispositif, la capsule étant fermée,

Figure 2 est une coupe axiale du même dispositif, la capsule étant ouverte,

Figure 3 est une coupe transversale selon la ligne III-III de la figure 1,

Figure 4 est une coupe axiale selon la ligne IV-IV de la figure 1,

Figures 5 à 9 sont des coupes axiales partielles montrant des variantes des moyens d'étanchéité de la capsule.

Figure 10 est une coupe analogue à la figure 2, mais avec un adaptateur.

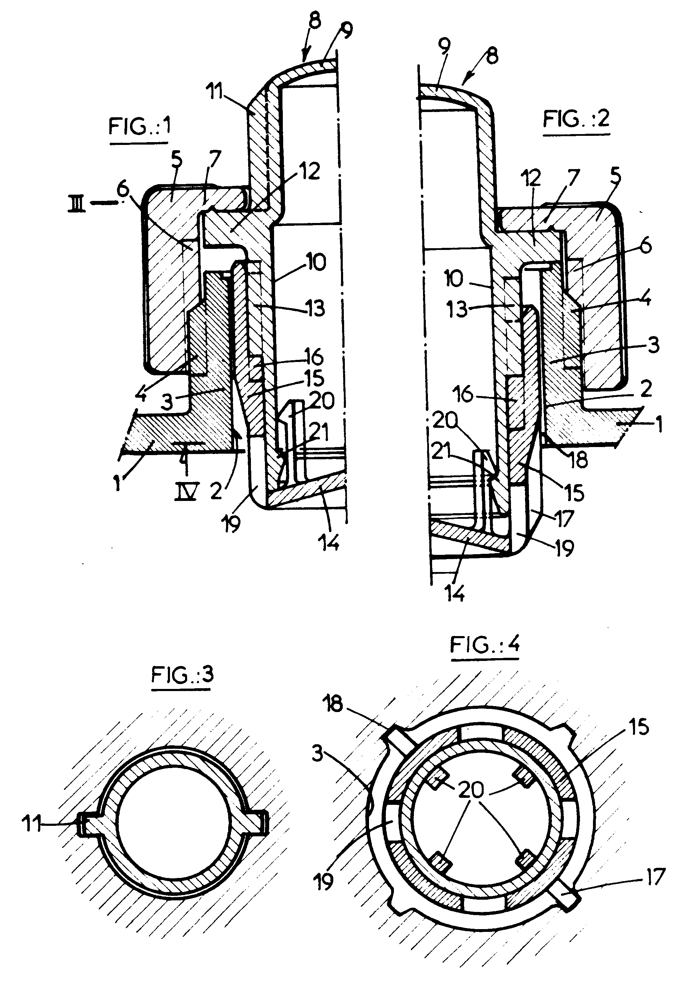

Les figures 1 et 2 sont relatives à un dispositif selon l'invention, qui est destiné à être mis en place dans un orifice d'un récipient de mélange. Le repère 1 désigne la paroi du récipient, et 2 l'orifice utilisé. L'orifice 2 peut être un orifice de remplissage, ou tout autre orifice convenable. Si c'est un orifice de vidange, situé dans le fond du récipient, le haut et le bas de la figure 2 seront inversés lors de l'utilisation du récipient.

L'orifice 2 est pourvu d'un col 3 qui présente un filetage extérieur 4. Un collier de serrage 5 présente un filetage intérieur 6, conçu pour coopérer avec le filetage 4 du récipient, et une collerette extérieure, de diamètre plus étroit 7. La capsule comprend une première partie 8, composée d'un fond 9, et d'une partie cylindrique dans l'ensemble 10. Cette partie cylindrique porte, sur sa face extérieure, de haut en bas sur les figures 1 et 2, des nervures 11, une collerette 12, destinée à venir se loger entre la collerette 7 du collier de serrage et le bord extérieur du col 3, et un filetage 13 à pas inverse de celui des filetages 4 et 6. L'extrémité extérieure de la paroi cylindrique 10 est constituée pour servir de surface d'étanchéité, ainsi qu'il sera expliqué plus loin.

La deuxième partie de la capsule comprend un fond 14, et une paroi cylindrique 15, dans laquelle pénètre la paroi cylindrique 10 de la première partie. La paroi 15 comporte un filetage 16 conçu pour coopérer avec le filetage 13 de la première partie, des nervures axiales 17, mieux visibles sur la figure 4, et qui sont destinées à coopérer avec des rainures 18 qui se trouvent sur la paroi intérieure du col 3. La paroi 15 est traversée par des lumières 19, destinées à l'écoulement du produit contenu à l'intérieur de la capsule.

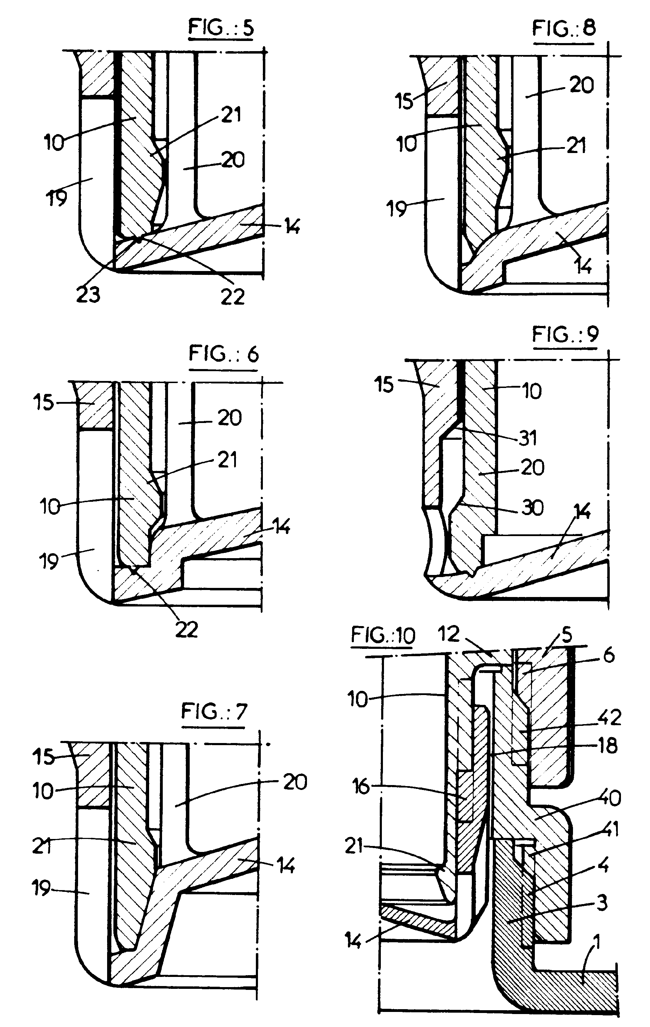

Au cas où le col 3 du récipient est dépourvu de rainures 18, ou de reliefs équivalents, on peut suppléer à cette déficience en montrant sur l'orifice 2 une adaptateur pourvu de telles rainures. Un tel adaptateur 40 est représenté à la figure 10. Il présente un filetage femelle 41 permettant de le visser sur le filetage 4 du col et un filetage mâle 42 sur lequel se vissera le filetage intérieur 6 du collier de serrage.

Le mode d'utilisation du dispositif est le suivant :

La capsule remplie de produit concentré, et fermée est fournie par le fabricant. L'utilisateur l'insère dans le collier de serrage 5, en prenant soin d'introduire les nervures 11 dans des rainures correspondantes de celui-ci. Ensuite, il met en place l'ensemble, en introduisant les nervures 17 de la deuxième partie de la capsule dans les rainures 18 du col du récipient, puis il serre le collier de serrage par vissage du filetage 6 sur le filetage 4.

Les rainures 18 sont fortement élargies vers l'extérieur du col, pour faciliter l'introduction des nervures 17.

La première partie de la capsule, entraînée par les nervures 11, tourne avec le collier de serrage, cependant que la deuxième parties de la capsule, retenue par les rainures 18 et les nervures 17, ne peut se déplacer que dans le sens axial (vertical sur les figures 1 et 2). Du fait que les filetages 13 et 16 sont à pas inverse par rapport au filetage 4 et 6, le serrage du collier 5 entraîne le desserrage relatif des première et seconde parties de la capsule. Il en résulte que l'extrémité de la partie cylindrique 10 de la première parties s'écarte du fond 14 de la seconde partie et que le produit concentré contenue dans la capsule peut alors s'écouler librement à travers les lumières 19.

On notera que ce résultat peut être obtenu avec des filetages ayant tous un pas à droite ou à gauche, à condition que le pas des filetages 13 et 16 soit d'une dimension différente de celui des filetages 4 et 6.

Lorsque le produit concentré s'est écoulé à l'intérieur du récipient, on peut récupérer la capsule en opérant une manoeuvre inverse : le desserrage du collier 5 entraîne le revissage réciproque des première et seconde parties, si bien que, lorsqu'on enlève la capsule, celle-ci est refermée et par conséquent les restes de produit concentré qu'elle peut contenir ne peuvent se déverser à l'extérieur.

Pour une nouvelle opération, on remplace la capsule usagée par une capsule pleine.

Le repère 20, aux figures 1, 2 et 4, désigne des crochets de sûreté, portés par le fond 14 de la seconde partie et qui coopèrent, en position de dévissage, avec un saillant 21, prévu à la face intérieure de la première partie de la capsule. Il peut arriver, en effet, que, si on a fait tourner le collier 5 sans que les filetages 4 et 6 coopèrent, alors que les nervures 17 sont déjà engagées dans les rainures 18, on ait un dévissage trop important des deux parties de la capsule, et que celle-ci risque de tomber dans le récipient avant que le collier 5 soit complètement serré. Cet inconvénient est évité par l'utilisation des crochets 20. La figure 4 montre quatre crochets 20. Il est clair que ce nombre n'est pas limitatif. Les crochets 20 sont de préférence placés entre les lumières 19 pour ne pas gêner l'écoulement du produit.

Les figures 5 à 8 sont des schémas de détail montrant comment l'étanchéité entre les deux parties de la capsule est réalisée. Sur la figure 5, l'étanchéité est réalisée grâce à une nervure circulaire 22, prévue sur l'extrémité de la partie cylindrique 10 de la première partie, et qui pénètre dans une gorge annulaire 23 creusée dans le fond 14 de la seconde partie. Bien entendu, il est possible de permuter la nervure et la gorge.

Aux figures 6 à 8, l'étanchéité est obtenue ou complétée par coopération de surfaces cylindriques, tronconiques, ou en forme de portion de tore.

A la figure 9, les crochets 20 ont été supprimés, et le résultat cherché est obtenue par la coopération d'un saillant externe 30 de la partie cylindrique 10 de la première partie, et d'un saillant interne 31 de la partie cylindrique de la seconde partie.

## Revendications

1. Dispositif pour introduire une quantité dosée d'un produit à l'intérieur d'une enceinte sans que ledit produit puisse se répandre à l'extérieur de l'enceinte, ce dispositif comprenant :
— un bouchon susceptible de se visser sur un orifice (2) traversant la paroi de l'enceinte,
— une capsule (8 ; 14, 15) qui fait partie dudit bouchon, et qui est en deux parties séparables, vissées l'une sur l'autre, l'une des parties étant entraînée en rotation avec le couvercle lors du vissage de celui-ci, alors que des moyens (17, 18) sont prévus pour empêcher la rotation de l'autre partie de la capsule pendant ce vissage, les sens et les pas des vissages des deux parties de la capsule l'une sur l'autre et du bouchon sur l'orifice (2) de l'enceinte étant calculés pour que le vissage du couvercle entraîne en même temps l'obturation de l'orifice et le dévissage relatif des deux parties de la capsule, ceci ayant pour conséquence la libération à l'intérieur de l'enceinte du produit contenu dans la capsule, caractérisé en ce qu'une partie de la capsule comporte des lumières (19) qui la traversent et qui sont obstruées par l'autre partie lorsque les deux parties (8 ; 14, 15) sont vissées à fond, de façon à contenir ledit produit de façon étanche dans la capsule, ces lumières (19) s'ouvrant par dévissage relatif des deux parties pour mettre l'intérieur de la capsule en communication avec l'intérieur de l'enceinte.

2. Dispositif selon la revendication 1, caractérisé en ce que le bouchon est constitué d'un collier (5) qui peut être monté par vissage sur le bord dudit orifice, et de la capsule elle-même, dont une première partie (8) est solidaire en rotation du collier, alors que la seconde partie et la paroi interne de l'orifice (2) comportent des moyens (17, 18) coopérants pour empêcher la rotation de la seconde partie.

3. Dispositif selon la revendication 2, caractérisé en ce que la première partie (8) de la capsule peut être séparée du collier (5), mais est serré entre le collier et le bord de l'orifice lorsque le bouchon est vissé.

4. Dispositif selon la revendication 3, caractérisé en ce que la première partie de la capsule comprend un fond (9) et une paroi cylindrique (10), ayant une ouverture, dirigée vers l'intérieur de l'enceinte lorsque le dispositif est en place, cette paroi cylindrique portant extérieurement une collerette (12) destinée à être serrée entre le bord de l'orifice et le collier, des saillants (11) ou rainures pour la coopération avec le collier et un filetage extérieur (13), et la seconde partie de la capsule comprend un fond (14) et une paroi cylindrique (15) ayant une ouverture dirigée à l'opposé de celle de la première partie, le bord de la paroi cylindrique de la première partie venant, en position vissée, en appui étanche sur le fond de la seconde partie, et la paroi cylindrique de la seconde partie présente un filetage intérieur (16) pour coopérer avec le filetage extérieur de la première partie, et des saillants (17) ou rainures pour la coopération avec des reliefs correspondants (18) de la paroi interne de l'orifice en vue d'empêcher la rotation de ladite seconde partie, cette paroi cylindrique présentant en outre les lumières (19) au voisinage du fond.

5. Dispositif selon l'une des revendications 1 à 4, caractérisé en ce que des moyens (20, 21, 30, 31) sont prévus pour empêcher les deux parties de la capsule de se séparer lorsqu'elles sont dévissées.

6. Dispositif selon la revendication 5, caractérisé en ce que lesdits moyens comprennent des crochets (20) portés par une des parties et coopérant avec des saillies de l'autre partie de la capsule.

7. Dispositif selon l'une des revendications 3 à 6, caractérisé en ce qu'il comprend un adaptateur (40) qui se fixe sur le récipient pour prolonger l'orifice (3), et qui porte lesdits reliefs (18) coopérant avec des saillants (17) ou rainures de la paroi cylindrique de la seconde partie en vue d'empêcher la rotation de celle-ci.

## Patentansprüche

1. Vorrichtung zum Einbringen einer dosierten Menge eines Produkts in das Innere eines Behälters, ohne daß das Produkt auf die Außenseite des Behälters gelangen kann, wobei die Vorrichtung aufweist :
— einen auf eine durch die Behälterwand gehende Öffnung (2) aufschraubbaren Verschluß,
— einer Kapsel (8 ; 14, 15), die einen Teil des Verschlusses bildet und aus zwei aufeinander geschraubten, voneinander trennbaren Teilen besteht, wobei eines der Teile beim Schrauben des Deckels drehend mitgenommen ist, während Einrichtungen (17, 18) vorgesehen sind, die ein Drehen des anderen Teils der Kapsel während des Schraubens verhindern, wobei die Richtungen und die Steigungen der Schraubvorgänge der beiden Teile der Kapsel aufeinander und des Verschlusses auf die Öffnung (2) des Behälters derart berechnet sind, daß das Schrauben des Deckels gleichzeitig den Verschluß der Öffnung und das relative Losschrauben der beiden Teile der Kapsel bewirkt, wodurch das in der Kapsel enthaltene Produkt in das Innere des Behälters freigesetzt wird, dadurch gekennzeichnet, daß ein Teil der Kapsel hindurchgehende Durchlässe (19) aufweist, welche durch das andere Teil gesperrt sind, wenn die beiden Teile (8 ; 14, 15) bis zum Anschlag geschraubt sind, derart, daß das Produkt in abgedichtetem Zustand in der Kapsel gehalten ist, wobei sich die Durchlässe (19) durch das relative Losschrauben der beiden Teile öffnen, um das Innere der Kapsel in Verbindung mit dem Inneren des Behälters zu bringen.

2. Vorrichtung nach Anspruch 1, dadurch gekennzeichnet, daß der Verschluß von einem Ring (5), der durch Verschraubung am Rand der Öffnung anbringbar ist, und von der Kapsel selbst gebildet ist, von der ein erstes Teil (8) drehfest mit dem Ring ausgebildet ist, während das zweite Teil und die Innenwand der Öffnung (2) Einrichtungen (17, 18) aufweisen, die zum Verhindern des Drehens des zweiten Teils zusammenwirken.

3. Vorrichtung nach Anspruch 2, dadurch gekennzeichnet, daß das erste Teil (8) der Kapsel vom Ring (5) lösbar ist, jedoch zwischen dem Ring und dem Rand der Öffnung eingespannt ist, wenn der Verschluß aufgeschraubt ist.

4. Vorrichtung nach Anspruch 3, dadurch gekennzeichnet, daß das erste Teil der Kapsel einen Boden (9) und eine zylindrische Wand (10) mit einer Öffnung aufweist, die zum Inneren des Behälters zeigt, wenn die Vorrichtung montiert ist, wobei die zylindrische Wand auf der Außenseite einen zwischen den Rand der Öffnung und den Ring einzuspannenden Kragen (12), Vorsprünge (11) oder Nuten zum Zusammenwirken mit dem Ring und ein Außengewinde (13) aufweist, und das zweite Teil der Kapsel einen Boden (14) und eine zylindrische Wand (15) mit einer Öffnung aufweist, die zu derjenigen des ersten Teils entgegengesetzt gerichtet ist, wobei der Rand der zylindrischen Wand des ersten Teils in der geschraubten Position in dichte Anlage an dem Boden des zweiten Teils gelangt, und die zylindrische Wand des zweiten Teils ein Innengewinde (16) zum Zusammenwirken mit dem Außengewinde des ersten Teils, und Vorsprünge (17) oder Nuten zum Zusammenwirken mit entsprechenden Konturen (18) der Innenwand der Öffnung aufweist, um ein Drehen des zweiten Teils zu verhindern, wobei die zylindrische Wand ferner in der Nähe des Bodens die Durchlässe (19) aufweist.

5. Vorrichtung nach einem der Ansprüche 1 bis 4, dadurch gekennzeichnet, daß Einrichtungen (20, 21, 30, 31) zum Verhindern des Lösens der beiden Teile der Kapsel beim Losschrauben vorgesehen sind.

6. Vorrichtung nach Anspruch 5, dadurch gekennzeichnet, daß die Einrichtungen Nasen (20) aufweisen, die von einem der Teile getragen sind und mit Vorsprüngen des anderen Teils der Kapsel zusammenwirken.

7. Vorrichtung nach einem der Ansprüche 3 bis 6, dadurch gekennzeichnet, daß sie einen Adapter (40) aufweist, der auf dem Behälter sitzt, um die Öffnung (2) zu verlängern, und der die genannten Konturen (18) trägt, welche mit Vorsprüngen (17) oder Nuten der zylindrischen Wand des zweiten Teils zusammenwirken, um das Drehen desselben zu verhindern.

## Claims

1. Device for introducing a dosed quantity of a product into an enclosed space without any possibility of the product spreading outside the said enclosure, comprising :
— a plug capable of being screwed onto an orifice (2) passing through the wall of the enclosure.
— a capsule (8, 14, 15) forming part of the said plug and consisting of two separable parts scewed to each other, one of the parts being driven in rotation with the cover while the latter is being screwed up, means (17, 18) being provided to prevent the other part of the capsule from rotating at the same time, while the directions and screw pitches of the two parts of the capsule in contact with each other and of the plug on the orifice of the enclosure are calculated to ensure that the operation of screwing up the cover results in the simultaneous sealing of the orifice and unscrewing of the two parts of the capsule from each other, so that the product contained in the capsule is thereby released into the enclosure, characterized by the fact that one part of the capsule comprises apertures (19) which pass through it and which are shut off by the other part when the two parts (8, 14, 15) are screwed tightly together, so that the said product is hermetically sealed into the capsule, these apertures (19) being opened by unscrewing the two parts in order to place the interior of the capsule in contact with that of the enclosure.

2. Device in accordance with Claim 1, characterized by the fact that the plug consists of a collar (5) which can be screwed onto the edge of the said orifice, and of the capsule itself, one part (8) of which is fast in rotation with the collar, while the second part and the internal wall of the orifice (2) comprise means (17, 18) interacting to prevent the rotation of the second part,

3. Device in accordance with Claim 2, characterized by the fact that the first part (8) of the capsule may be separated from the collar but is held firmly between the collar and the edge of the orifice when the plug is screwed up.

4. Device in accordance with Claim 3, characterized by the fact that the first part of the capsule comprises a base (10) and a cylindrical wall (120) having an opening towards the interior of the enclosure when the device is in position, this cylindrical wall having an outer flange (12) designed to be clamped between the edge of the orifice and the collar, projections (11) or grooves designed to interact with the collar, and an external screw threading (130), while the second part of the capsule comprises a base (14) and a cylindrical wall (15) having an opening in the opposite direction to that taken by the opening of the first part, the cylindrical wall of the second part having an internal screw threading (16) designed to interact with the external screw threading of the first part, and projection (17) or grooves designed to interact with corresponding reliefs (18) on the internal wall of the orifice, this cylindrical part also being provided with apertures (19) in the vicinity of the base.

5. Device in accordance with any one of Claims 1-4, characterized by the fact that means (20, 21, 30, 31) are provided for the purpose of preventing the two parts of the capsule from separating when unscrewed.

6. Device in accordance with Claim 5, characterized by the fact that the said means comprise hooks (20) fitted to one of the ports and interacting with projections on the other part of the capsule.

7. Device in accordance with any one of Claims 3-6, characterized by the fact that it comprises an adaptor (40) which is affixed to the receptacle in order to prolong the orifice (3) and which is provided with the said reliefs interacting with projections (17) or grooves of the cylindrical wall of the second part in order to prevent the latter from rotating.

FIG.:1

FIG.:2

FIG.:3

FIG.:4

FIG.: 5

FIG.: 8

FIG.: 6

FIG.: 9

FIG.: 7

FIG.: 10